# EUROPEAN PATENT APPLICATION

(11) **EP 2 680 123 A2**
(43) Date of publication of application: **01.01.2014**
(21) Application number: 13173300.8
(22) Date of filing: 21.06.2013
(51) Int. Cl.: G06F 3/0488, G06F 3/048, G06F 9/44

(54) **Method and Device of Task Processing of One Screen and Multi-Foreground**

(30) Priority: 27.06.2012 CN 201210219554
(71) Applicant: Samsung Electronics Co., Ltd, Gyeonggi-do 443-742 (KR)
(72) Inventor: Yuan, Shun, Chaoyang District (CN)
(74) Representative: Birchenough, Lewis

(57) **Abstract**

A method of task processing of one screen and multi-foreground is provided. The method includes running a plurality of application windows on a same display screen by a multi-task processing mechanism, receiving user events, classifying the received user events into different types, assigning the received user events with flags to different tasks so as to be processed via a task management module, and returning respective processing results to respective application windows. The method and device of task processing of one screen and multi-foreground provided herein address the issue of reasonable distribution of user events between a plurality of foreground tasks on a same screen and displaying the task windows simultaneously to run the plurality of foreground tasks simultaneously on the same screen.

## Description

### BACKGROUND OF THE INVENTION

### 1. Field of the Invention:

The present invention relates to mobile communications. More particularly, the present invention relates to a method and device of task processing of one screen and a multi-foreground.

### 2. Description of the Related Art:

The computing and processing power of mobile phones, smart Televisions (TVs) and tablet Personal Computers (PCs), etc. are increasing. Generally, multiple applications can work at the same time. The means of interacting with users are becoming richer. In addition to traditional input devices such as a keyboard and a mouse, touchscreens are widely used, which developed from the original single point touch supporting a single input point to a multi-point touch supporting up to ten input points. Therefore, there can be a plurality of events input by users at the same time. Thus, there are now a number of ways for user input at the same time, thereby generating multiple events. Demands are produced, which means distributing between tasks at the same time. Previously, because a keyboard and mouse are just an event of a single input point, only one foreground task exists, and the foreground task occupies all user inputs. At the present time, the emergence of touchscreens enables multi-point operation of user inputs, thereby, there is a need for a system for generating multiple foregrounds.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method which addresses the issue of reasonable distribution of user events between a plurality of foreground tasks on a same screen and the simultaneous display of these task windows to run the plurality of foreground tasks simultaneously on the same screen.

To address the above technical issues, one of the aspects of the present invention is to provide a method of task processing of one screen and multi-foreground, including the following steps: S1 running a plurality of application windows on a same display screen by a multi-task processing mechanism; S2 receiving a user event; S3 classifying the received user event; and S4 assigning the received user event to different tasks to be processed by a task management module, and returning respective processing results to respective application windows.

According to another exemplary embodiment of the present invention, said step S1 also includes the following steps: S11 creating a multi-task processing mechanism running a plurality of tasks simultaneously on the same screen by a multi-task system, wherein said tasks include foreground tasks for receiving user events and background tasks for not receiving user events; and S12 classifying said plurality of tasks in a first priority by a first task management module, so that the priority of the foreground tasks is higher than the priority of the background tasks.

According to another exemplary embodiment of the present invention, said user events include a first type of events with position information and a second type of events without position information.

According to another exemplary embodiment of the present invention, said first type of events are represented as a first set of parameters (event, data, coordinate), and said second type of events are represented as a second set of parameters (event, data).

According to another exemplary embodiment of the present invention, said first type of events are represented as a first set of parameters (event, data, coordinate), and the second type of events are represented as a second set of parameters (event, data, default value).

According to another exemplary embodiment of the present invention, said step S3 also include the following steps: S31 classifying said user events into different types by a decision unit in said event management module, and generating parameters corresponding to said types; and S32 adding an event flag in the parameters of said user events by a flag adding unit in said event management module to distinguish the schedule of said user event being processed.

According to another exemplary embodiment of the present invention, said added event flags are represented as a third set of parameters (event, data, coordinate, flag).

According to another exemplary embodiment of the present invention, said step S4 also includes the following steps: S41 processing all of the received user events by a task executing unit in said task management module; and S42 modifying the added event flag in said user events which has been processed by a flag modifying unit in said task management module.

According to another exemplary embodiment of the present invention, it further comprises the following steps: S5 displaying at least one of tasks being executed by a display module.

According to another exemplary embodiment of the present invention, said step S5 also includes the following steps: S51 deciding pixel overlapped areas by an attribute unit of overlapped areas in said display module; S52 completing the conversion of display features of said overlapped areas by an attribute conversion unit in said display module.

According to another exemplary embodiment of the present invention, said step S52 also includes the following steps: S521 converting the display features of said overlapped areas in a defined way by said attribute conversion unit, when the pixels of foreground tasks being executed fall into the areas where other task are; S522 forming an integral window of foreground tasks by overlaying the display features of the overlapped areas which have been converted in the defined way; and S523 displaying on said screen the integral window of said foreground tasks together with the windows of other background tasks which are processed by the original window mechanism of the system.

The other object of the present invention lies in providing a task processing device of one screen and multi-foreground, including: a display screen for supporting a multi-task processing mechanism to run a plurality of application windows; an application window for receiving user events; an event management module for classifying the received user events into different types; and a task management module for assigning the received user events to different tasks to be processed and returning respective processing results to respective application windows.

According to another exemplary embodiment of the present invention, said multi-task processing mechanism includes: a multi-task system for creating a multi-task processing mechanism running a plurality of tasks simultaneously on the same screen, wherein said tasks include foreground tasks of receiving user events and background tasks of not receiving user events; and a first task management module for classifying the plurality of tasks in a first priority so that the priority of the foreground tasks is higher than the priority of the background tasks.

According to another exemplary embodiment of the present invention, said user events include a first type of events with position information and a second type of events without position information.

According to another exemplary embodiment of the present invention, said first type of events are represented as a first set of parameters (event, data, coordinate), and the second type of events are represented as a second set of parameters (event, data).

According to another exemplary embodiment of the present invention, said first type of events are represented as a first set of parameters (event, data, coordinate), and the second type of events are represented as a second set of parameters (event, data, default value).

According to another exemplary embodiment of the present invention, said event management module includes: a decision unit for classifying said user events to different types and generating the parameters corresponding to said types; and a flag adding unit for adding event flags in the parameters of said user events to distinguish the schedule of said user events being processed.

According to another exemplary embodiment of the present invention, said added event flags are represented as a third set of parameters (event, data, coordinate, flag).

According to another exemplary embodiment of the present invention, said task management module includes: a task executing unit for processing all of the received user events; and a flag modifying unit for modifying the added event flags in the user events which has been processed.

According to another exemplary embodiment of the present invention, it further includes a displaying module for displaying at least one of the tasks being executed.

According to another exemplary embodiment of the present invention, said displaying module includes: an attribute unit of overlapped areas for deciding the pixel overlapped areas; an attribute conversion unit for converting the display features of said overlapped areas in a defined way by said attribute conversion unit, when the pixels of foreground tasks being executed fall into the areas where other tasks are.

According to another exemplary embodiment of the present invention, said defined ways include: when the pixels of foreground tasks of being executed fall into the areas in which other tasks are, converting the display features of said overlapped areas in a defined way by said attribute conversion unit; forming an integral window of foreground tasks by overlaying the display features of the converted overlapped areas; and displaying on said screen the integral window of said foreground tasks together with the windows of other background tasks which are processed by the original window mechanism of the system.

The method and device of task processing of one screen and multi-foreground provided by the present disclosure addresses the issue of reasonable distribution of user events between a plurality of foreground tasks on a same screen and the simultaneous display of these task windows to run the plurality of foreground tasks simultaneously on the same screen.

The additional aspects and advantages of the present invention will be partly provided and will become obvious from the following depictions, or will be known by the practice of the present invention.

### BRIEF DESCRIPTION OF THE DRAWINGS

The above and/or additional aspects and advantages of the present invention will be obvious and easy to understand from the following depictions of exemplary embodiments in combination with the accompanying drawings, wherein:

FIG. 1 is a block diagram according to an exemplary embodiment of the present invention;

FIG. 2 is a flowchart according to an exemplary embodiment of the present invention;

FIG. 3 is a flowchart according to an exemplary embodiment of the present invention;

FIG. 4 is a block diagram according to an exemplary embodiment of the present invention;

FIG. 5 is a display diagram on a screen according to an exemplary embodiment of the present invention;

FIG. 6 is a block diagram according to an exemplary embodiment of the present invention;

FIG. 7 is a display diagram on a screen according to an exemplary embodiment of the present invention;

FIG. 8 is a display diagram on a screen according to an exemplary embodiment of the present invention;

FIG. 9 is a display diagram on a screen according to an exemplary embodiment of the present invention;

FIG. 10 is a display diagram on a screen according to an exemplary embodiment of the present invention; and

FIG. 11 is a display diagram on a screen o according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

Exemplary embodiments of the present invention are specifically described with reference to the accompanying drawings. However, the present invention can be embodied in many different ways, and shouldn't be considered to limit to specific embodiments illustrated here. On the contrary, these embodiments are provided to make the present invention to be disclosed thoroughly and completely, and to completely convey the ideas, opinions, objects, concepts, reference solutions and protection scope of the present invention to the skilled in the art. The terms used in the detailed description of the specific schematic embodiments shown in the drawings are not to limit the invention. In the drawings, the same reference signs represent same elements.

Unless otherwise specified, the singular forms of the expressions of "a", "an", "the" and "said" as used herein can also include the plural form. It should be further understood that the expression of "comprise" used in the description of the exemplary embodiments of the present invention shall mean the existence of said features, integers, steps, operations, elements and/or components, but shall not exclude the existence or addition of one or more of other features, integers, steps, operations, elements, components and/or combinations thereof. It should be understood that when an element is referred to be "connected" or "coupled" to another element, the element can be directly connected or coupled to the other element, or there may be middle elements. In addition, the expressions of "connection" or "coupling" as used herein can include wireless connections or coupling. The expression of "and/or" as used herein includes any one and all combinations of units in the listed one or more related items.

Unless otherwise defined, all terms used herein (including technical terms and scientific terms) have the same meanings to what are generally understood by the skilled in the art. It should also be understood that the terms defined in general dictionaries shall be understood to have consistent meanings with the meanings in the contexts of the prior art. Moreover, unless defined as in this document, they shall not be interpreted as ideal or too formal meanings.

A term "terminal" as used herein not only includes the device having wireless signal receivers without a transmitting capability, but also includes the device having receiving and transmitting hardware which enables bi-directional communication on bi-directional communication links. Such a device can include cellular or other communication devices with or without a multi-line display screen, Personal Communication Systems (PCSs) which can combine voice and data processing, fax and/or data communication capability, a Personal Data Assistant (PDA) which can include radio frequency receivers and a pager, internet/intranet access, a web browser, a notebook, a calendar and/or a Global Positioning System (GPS), and/or laptop and/or palm Personal Computer (PC) or other devices including a radio frequency receiver. The term "mobile terminal" as used herein can be portable and transportable, and can be installed in aerial, marine and/or terrestrial transporting tools, or adapted to and/or configured to run in any other positions of the globe and/or space locally and/or in distributed form. The term "mobile terminal" as used herein can also be a communication terminal, a surfing terminal, a music/video player terminal, etc. A "mobile terminal" used herein can also be a PDA, Mobile Internet Device (MID) and/or mobile phones with music/video play functions.

The term "terminal" as used herein can include a mobile terminal, portable terminal and stationary terminal, such as mobile phone, user device, smart phone, Digital TeleVision (DTV), computer, digital broadcast terminal, personal digital assistant, Portable Multimedia Player (PMP), navigator and other similar devices. The term "mobile terminal" as used herein can be divided into a handhold terminal and on-vehicle terminal based on the possibility of being directly carried by users. Because the functions of the terminal are versatile, they are realized to provide multimedia players in compound functions, which include taking photos or moving images, playing music or moving image files, playing games, receiving broadcasts etc. The term "terminal" as used herein not only includes the hardware portion, but also includes the software portion, also includes the combination of the software and hardware. The term "terminal" as used here can execute and control at least one of the applications, and can achieve a multi-task executing function and control two and more applications at the same time.

Exemplary embodiments illustrated by the present invention use a portable multi-function device including touch display screen as examples. However, it should be understood by the skilled in the art that some user interfaces and related processing methods can also be applied to other devices, such as the devices having one or more physical user interfaces, for example PCs and notebook computers having physical clicking keys, physical keys, physical trackers, physical touch sensor areas.

The term "task" as used herein includes an activity of running of a program with some independent functions in regards to a certain data set.

The term "application" as used herein includes varieties of modules with a certain functions running in the PCs, including but not limited to program modules. An application can be a piece of existing programs, in the system, which once executed, forms a task. The program can run a lot of times, forming multiple tasks. Each task has a window assigned by the system. For example, the system can run several applications of a word processor simultaneously, and edit different files, which forms multiple tasks.

The term "event" as used herein includes the messages received by the system. The events can have varieties of sources, including hard-disk devices, web and users inputs, and the events input by users include mice, keyboards, touchscreens etc., and also somatosensory input-kinect.

The techniques disclosed herein improve the window mechanism of previous simultaneous working of multiple applications on a same screen. It is not that the uppermost window can receive user events, but multiple application windows can all receive user events. Unless there are special application requirements, the windows that can receive user events are placed on top of the windows that can't receive events. Under this system, there is a need for new methods of displaying windows and processing user input events.

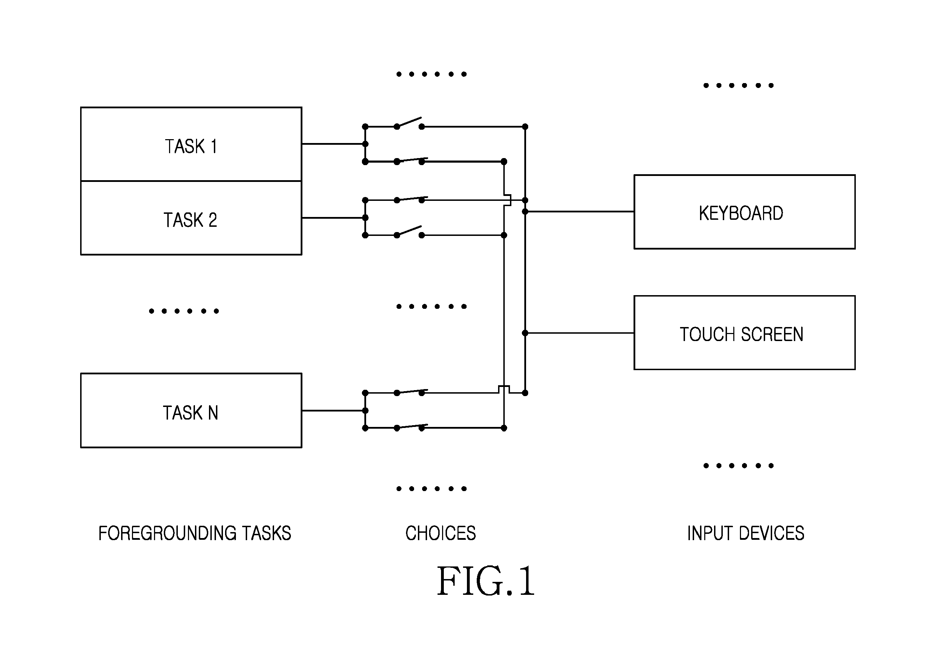

FIG. 1 is a block diagram according to an exemplary embodiment of the present invention.

Referring to FIG. 1, an exemplary embodiment provided by the present invention is arranging all foreground tasks on a same screen into a sequential queue. Users can specify an input device which can be chosen by every foreground task. As shown in FIG. 1, all foreground tasks are arranged into a sequential queue, with the input devices of keyboards and touchscreens, etc. Users can choose a device by which a task can be input by selector switches (e.g., soft switches realized by software and/or by hardware). For example, in FIG 1, task 1 can be specified to inputs from touchscreens, and can't receive the input from keyboards. Task 2 can be specified to inputs from keyboards, and can't receive the input from touchscreens. Task N can not only receive inputs from touchscreens, but also receive the inputs from keyboards. Then a flag is added to all the user input events (Event 1 , Event 2..., Event N ) received simultaneously. The flag can indicate whether the user event is processed or not. User input events received simultaneously can be one or more. The first task in the beginning of the queue processes all the user events, and the added flag is modified based on whether the event is processed by the first task. Then the second task in the queue processes all the events with the added flag. Wherein, the flags of some events can be modified by the first task. Then the added flag is modified based on whether the event is processed by the second task, until the last task in the queue. Next, all the events with the added flags (some of which can be modified by the tasks) are passed to the system to be processed. The user event on the next time can be one or more, and can be processed in the same way.

In the present disclosure, a queue is added to the processing procedure of input events, which combines the running applications that can interact with users. The portion of event filtering and modification is added to the application program. By this portion, user input events can be transferred to the running application for being processed and displayed. For example, multiple foreground tasks are arranged into a queue, and each can obtain the input of all touch information and the touch information transferred down by the former task in the queue, process them together synthetically and generate touch information to be transferred to the next task in the queue. Moreover, users can freely adjust the priority of these applications in the queue which can interact with users. For example, users can create an application like the task manager in Windows, but it only controls all currently running foreground tasks. It can be started via icons or above pop boxes. By keeping the queue model of the related art, a queue of foreground tasks is newly created to include all foreground tasks to process the events from a same input device (such as a touchscreen). For example, all the running applications which can interact with users can be merged by a list structure.

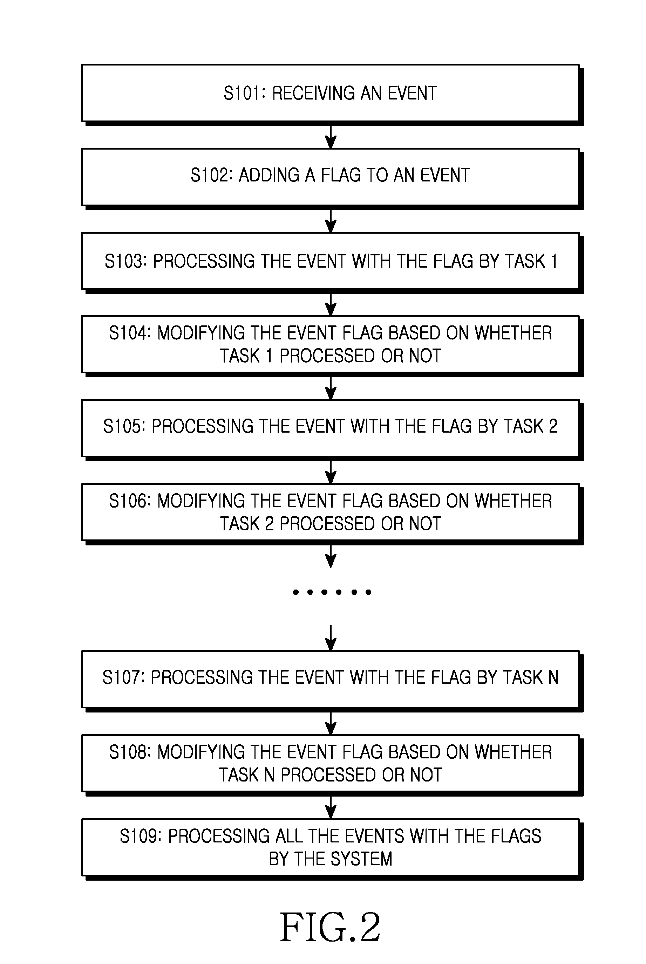

FIG. 2 is a flowchart according to an exemplary embodiment of the present invention.

Referring to FIG. 2, an exemplary embodiment of the present invention provides a method of events receiving and processing as described below.

In step S101, an event is received. Receiving an event input by users. Users can have multiple input events at the same time. For example, event 1 is keyboard, event 2 is gravity sensor, event 3 is a touch point on a touchscreen, event 4 is the touching of another point other than the point of event 3, etc. So the number of events may be one or more. Events can be divided into the events with positions on the screen, such as mice, touchscreens and the events without the positions on the screen, such as keyboards and gravity sensors. Wherein, every event of the first type can be represented as a set of numbers (e.g., event, data, coordinate), the second type of events can also be represented as a set of numbers (e.g., event, data) not having the coordinate information. An "event" is the type of an event, for example, mice, keyboards, touchscreens, etc. can be represented with a different event, "data" is the data carried by the event, for example, the data of a keyboard may be a key value, the data of a mouse can be a left key, a right key and a middle key. The data of a touchscreen can be an amount of pressure, coordinate is the position coordinates of an event on the screen. For simplicity, the second type of events can also be represented as (event, data, default value), wherein the portion of the coordinate can use a special coordinate which doesn't exist on the screen, i.e., default value.

In step S102, a flag is added to events. A flag is added to the end of all events, which can denote the situation of an event being processed by a task. This flag can use initial default values. The event with the added flag can be represented as (event, data, coordinate, flag).

In step S103, the events with the added flag by task 1 are processed. Task 1 processes all received user input events. These events can be represented as the form of (event, data, coordinate, flag). Task 1 processes events based on the scope of its window, input device assigned to a task by users and the processing of programs. For example, the touchscreen event in its own window can be processed, but not the touchscreen event on other positions.

In step S104 event flags are modified based on whether task 1 has processed or not. If task 1 has processed one event, the flag of this event needs to be changed into flag¹. Flag¹ indicates that task 1 has processed this event. Thereafter, this event can be represented as (event, data, coordinate, flag¹). The flag of the event which hasn't been processed by task 1 keeps unchanged. The event processed by task 1 can be represented as (event, data, coordinate, flag), and the event not processed by task 1 can continue to be represented as (event, data, coordinate, Hag).

In step S105, the events with the added flag by task 2 are processed. Task 2 receives all user input events. Some of them have been processed by task 1, so their flags have been modified by task 1, and represented as (event, data, coordinate, flag¹), while some have not been processed by task 1, and their flags are still the initial value, and can be represented as (event, data, coordinate, flag). Like task 1, task 2 processes events based on the scope of its window, the input device assigned to the task by users and the processing of program.

In step S106, the flag of an event is modified based on whether task 2 has processed or not. If task 2 processed one event, then the flag of this event needs to be modified to indicate that task 2 has processed this event. The flag of the event simultaneously processed by task 1 and task 2 can be represented as flag¹², the flag of the event not processed by task 1 but processed by task 2 as flag², the flag of the event not processed by task 2 but processed by task 1 as flag¹, the flag of the event not processed by task 1 and task 2 as flag. Then these events are transferred to task 3 to be processed, and so on, until the last one in all foreground tasks.

In step S107, an event is processed with the added flag by task N. The last task N in foreground tasks processes the event. It operates like steps S104 and S106.

In step S108, the flag of an event is modified based on whether task 2 processed or not. The last task N in foreground tasks processes the flag of an event. It operates like steps S104 and S106. Then these events will be transferred to the system to be processed.

In step S109, all the events with the added flags by the system are processed. If processed by foreground tasks, the values of flags of these events will be modified, and the processing will be recorded. If not processed by foreground tasks, the values of flags will still be initial values. Then the system will process these events, if needed.

The present exemplary embodiments add an attribute for an application program. The display feature of overlapped portions of multiple windows which can interact with users is defined. The display feature is one attribute, specifying the display attributes of multiple foreground tasks on the overlapped areas, for example how much the transparency of the back-ground of the overlapped portion is, and how much the transparency of the fore-ground is. Where it doesn't overlap with others that can overlap with user interacting windows, the windows can be displayed as the old mechanism. On the overlapped areas, the windows are transformed based on the attribute, and are overlaid so that they can all be displayed. One running task can be divided into two states, namely the foreground and the background. The foreground can interact with users, but the background cannot. It is set by users, and users can place a task in the foreground or the background, for example, fg (the abbreviation of "foreground") and bg (the abbreviation of "background") orders in Unix.

The transformation and overlaying of the attributes can be achieved by the following schematic embodiment for the overlaying windows: overlaying portions=back-ground transparency of task 1*back-ground of task 1+fore-ground transparency of task 1*fore-ground of task 1+ back-ground transparency of task 2*back-ground of task 2+fore-ground transparency of task 2*fore-ground of task 2+...+ back-ground transparency of task N*back-ground of task N+ fore-ground transparency of task N*fore-ground of task N. There are other implementing solutions which can be used.

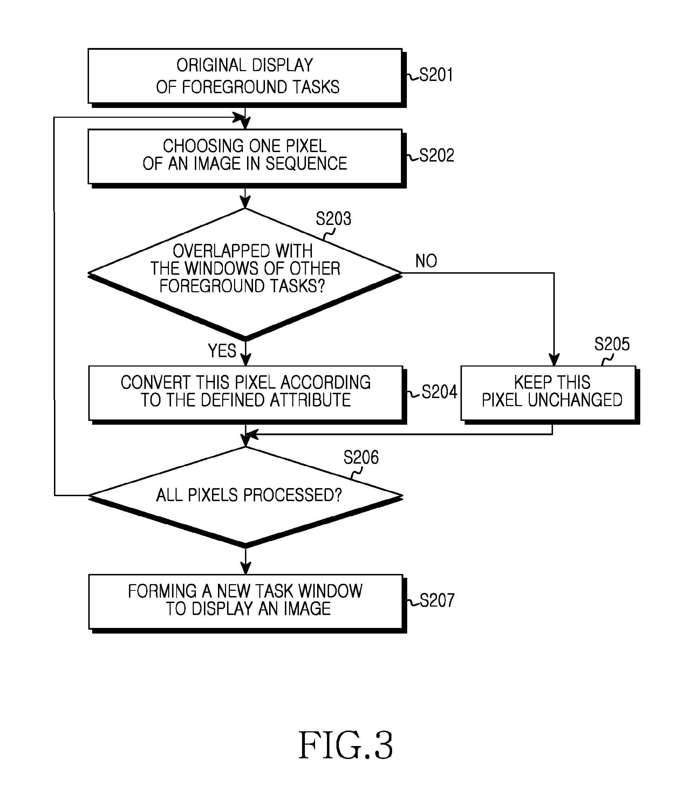

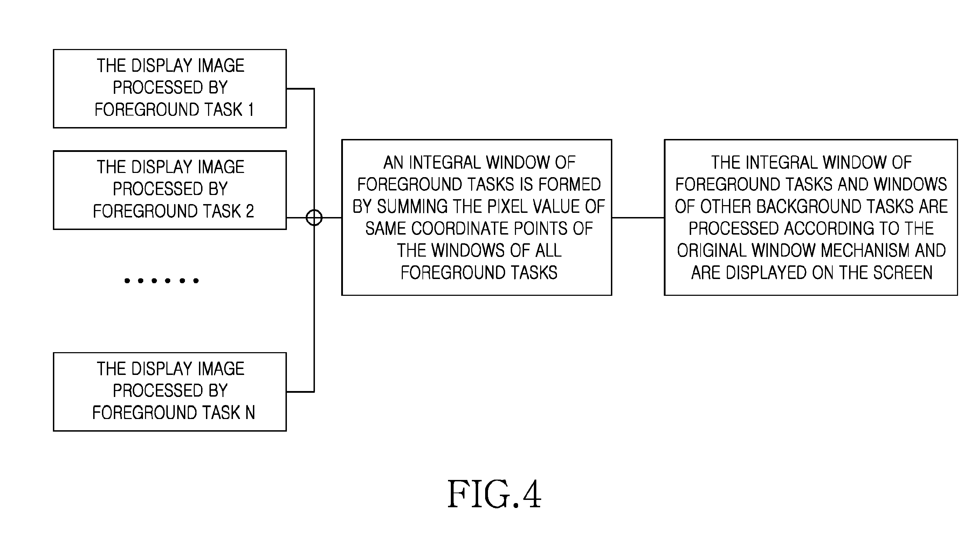

FIG. 3 is a flowchart according to an exemplary embodiment of the present invention, and FIG. 4 is a block diagram according to an exemplary embodiment of the present invention.

Referring to FIGS. 3-4, the steps of foreground tasks displaying of the exemplary embodiments of the present invention are described below.

In step S201, the foreground tasks are originally displayed. None of foreground task windows show the running result to users.

In step S202, every pixel in an image in sequence is chosen. A foreground task window is comprised of multiple pixels, forming a rectangle. For example, in color monitors, a pixel is the most basic point, comprising of three colors of red, green and blue. Every pixel of the foreground task window will be analyzed.

In step S203, it is determined whether there is overlap with the windows of other foreground tasks. The pixel to be analyzed by step S202 has a unique coordinate in a whole screen, and whether this coordinate is on the scope of other foreground tasks is decided.

In step S204, the pixel is converted according to a defined attribute. If it is determined that there is overlap with the windows of other foreground tasks in step S203, the coordinate of this pixel is also on the scope of other foreground task windows. The attribute is displayed based on the one set by users, which specifies the display attribute of the overlapped area, for example, the transparency of an overlapped portion of windows or color change, etc. can be specified.

In step S205, the pixel is kept unchanged. If it is determined that there is not overlap with the windows of other foreground tasks in step S203, then the coordinate of this pixel is not on the scope of other foreground task windows, on this point, and the pixel is kept unchanged.

In step S206, it is determined whether all pixels have been processed or not. If all pixels have been processed, the process proceeds step S207, otherwise the process returns to step S202.

In step S207, a new display image of task windows are formed. After all pixels of this foreground task window have been processed, a new window display image of this foreground task is created.

As shown in FIG. 4, after having been processed, all the foreground tasks overlay to form an integral window of foreground tasks, which together with other background task windows are processed by the original window mechanism of the system, then are displayed on the screen.

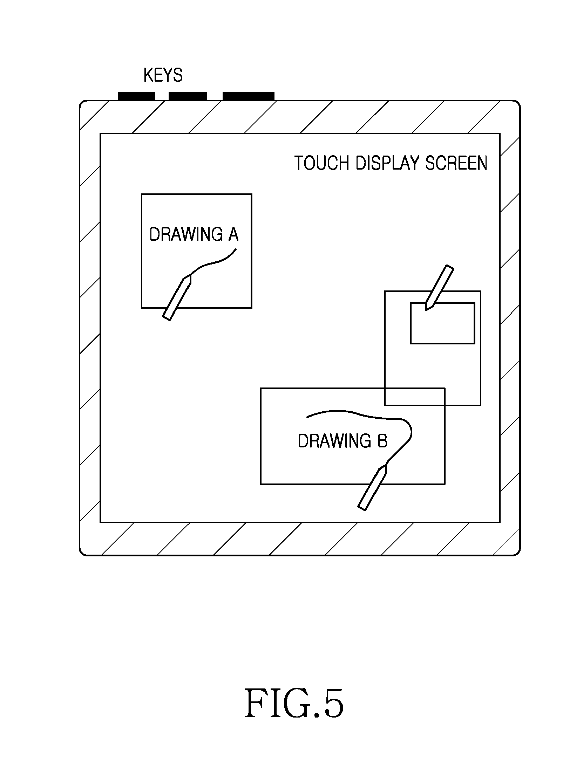

FIG. 5 is a display diagram on a screen according to an exemplary embodiment of the present invention.

As shown in FIG. 5, multiple foreground tasks run simultaneously. Users can manipulate these foreground tasks at the same time, without mutual influences. With a device having a touch display screen and keys, multiple tasks can be launched to interact with users at the same time. For example, two launches of the drawing application generate two drawing tasks, shown respectively as drawing A and drawing B. A game application can be launched again to obtain a game task. The present exemplary embodiment facilitates the operating of a tablet PC and other electronic devices by a whole family without any interference. For example, dad is playing games, while mom is teaching their child to draw. In the future, tablet PCs may become bigger, and many such needs exist.

Users can arrange these tasks, such as in the order of drawing A, drawing B and game, so drawing A is task 1, drawing B is task 2 and the game is task 3. The system can obtain multiple inputs from users simultaneously, such as a keying event, a touch point event respective of two drawing tasks, a touch point event in gaming.

As in step S101 of FIG. 2, in the form of (Event, value, coordinate), keying can be represented as (KeyEvent, KeyValue, DefaultValue), three touch events can be represented respectively as (TouchEvent, TouchValue1, Coordiante1), (TouchEvent, TouchValue2, Coordinate2), and (TouchEvent, TouchValue3, Coordinate3). Then the value of flag is added according to step S102 of FIG. 5. The flag can be represented as an integer of 16 bits. Every bit represents whether it is processed by the task in corresponding order. This way, simultaneous running foreground tasks not greater than 16 can be represented. The initial value is 0000000000000000 (binary) due to being not processed at the beginning, and four events can be represented as (KeyEvent, KeyValue, DefaultValue , 0000000000000000),

TouchEvent, TouchValue1, Coordinate1, 0000000000000000 ) , ( TouchEvent, TouchValue2, Coordinate2, 0000000000000000 ) , ( TouchEvent, TouchValue3, Coordinate3, 0000000000000000 ) .

Drawing A firstly processes all these events. If users don't choose a keying device for this task, and just assign a touchscreen device, then drawing A can only choose the events on the scope of its window according to the design of application, and ignore other events. After drawing A has being processed, these four events can be represented as (KeyEvent, KeyValue, DefaultValue , 0000000000000000),

TouchEvent, TouchValue1, Coordinate1, 1000000000000000 ) , ( TouchEvent, TouchValue2, Coordinate2, 0000000000000000 ) , ( TouchEvent, TouchValue2, Coordinate3, 0000000000000000 ) .

And so forth, if drawing B doesn't choose a keying device, then it only processes the events in its own window, and the event processed by this drawing is (KeyEvent, KeyValue, DefaultValue , 0000000000000000),

( TouchEvent, TouchValue1, Coordinate1, 1000000000000000 ) , ( TouchEvent, TouchValue2, Coordinate2, 0100000000000000 ) , ( TouchEvent, TouchValue3, Coordinate3, 0000000000000000 ) .

There may be the possibility of (TouchEvent, TouchValue2, Coordinate2, 0100000000000000) being within the game window due to the partial overlaying of drawing B and the game, and the two events of ( TouchEvent, TouchValue2, Coordinate2, 0100000000000000 ) and ( TouchEvent, TouchValue3, Coordinate3, 0000000000000000 ) are within the game window. The game application can obtain that ( TouchEvent, TouchValue2, Coordinate2, 0100000000000000 ) has been processed, and the program can be designed to ignore the events processed. So the game task will only process ( TouchEvent, TouchValue3, Coordinate3, 0000000000000000 ) . Users can also choose that the game task can receive a keying event to be processed. After being processed by the game task, the event will change to (KeyEvent, KeyValue, DefaultValue , 0010000000000000),

( TouchEvent, TouchValue1, Coordinate1, 1000000000000000 ) , ( TouchEvent, TouchValue2, Coordinate2, 0100000000000000 ) , ( TouchEvent, TouchValue3, Coordinate3, 0010000000000000 ) . After receiving these events, the system can also process them, such as keying event, which reasonably distributes all events received at the same time. The feature at the time of task overlapped can be set, for example how much the transparency is. For example, the transparency of overlapped portions of drawing A, drawing B and the game is set to 30%. This way, all tasks can be displayed. The form of task manager and other applications similar to Windows and Android can be used for the configuration of each foreground task. The configuration program of each foreground task can be launched by an indicator bar and task bar. These are the currently existing proven technique.

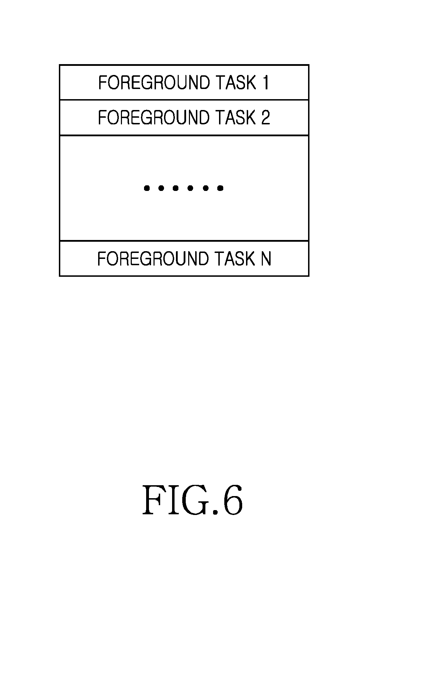

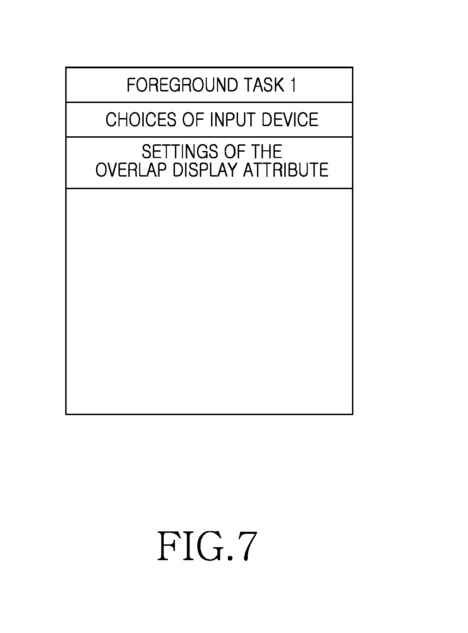

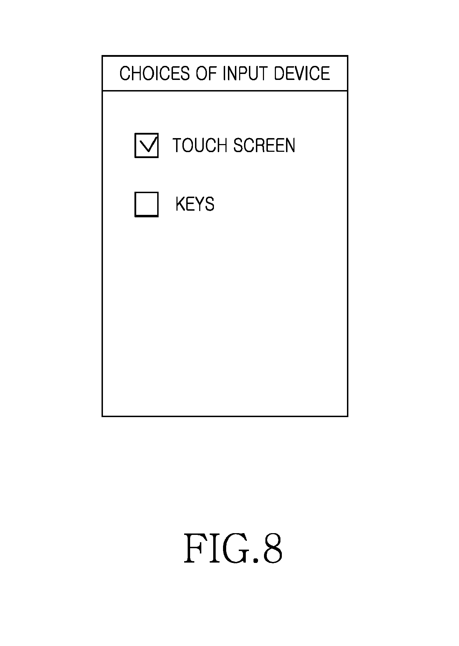

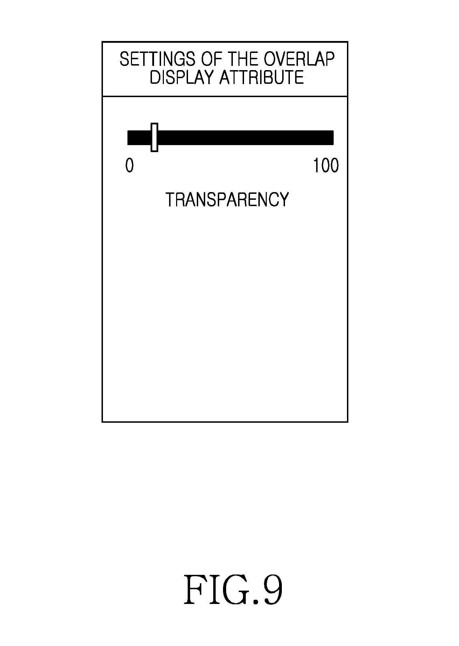

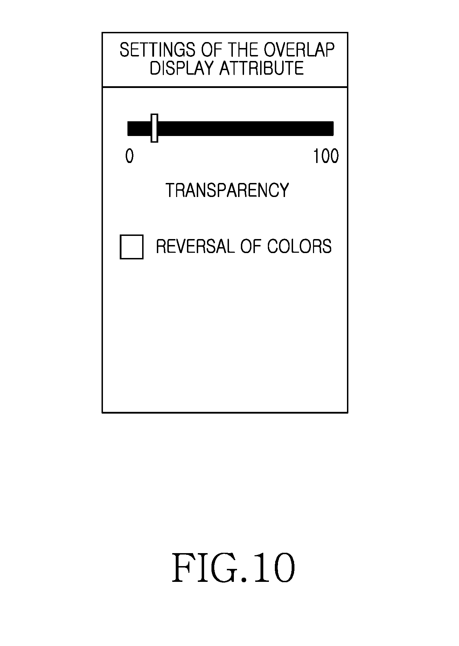

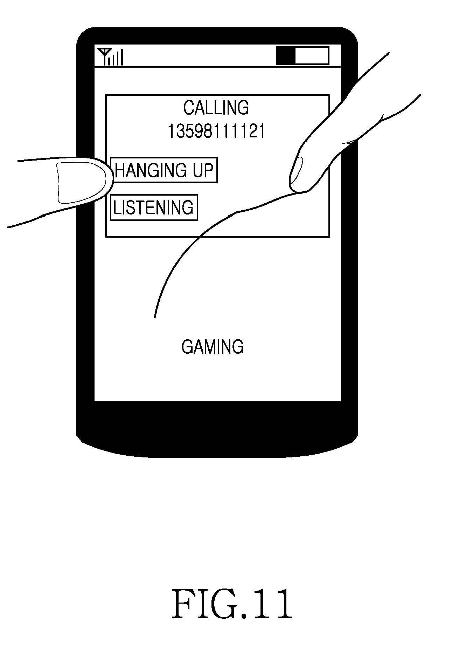

FIG. 6 is a block diagram according to an exemplary embodiment of the present invention, FIG. 7 is a display diagram on a screen according to an exemplary embodiment of the present invention, FIG. 8 is a display diagram on a screen according to an exemplary embodiment of the present invention, FIG. 9 is a display diagram on a screen according to an exemplary embodiment of the present invention, FIG. 10 is a display diagram on a screen according to an exemplary embodiment of the present invention, and FIG. 11 is a display diagram on a screen o according to an exemplary embodiment of the present invention.

Referring to FIG. 6, the management of the configuration of all foreground tasks can be achieved based on an event handing queue. A list is created to list all foreground queues, and users can adjust the order of every task on this interface, also choose a task to go to the next setting. Referring to FIG. 7, users can choose one of foreground tasks to go to next menu listing configuration options. Referring to FIG. 8, users can choose option items of input devices to go to next menu listing options of input devices. Users can choose which foreground task receives the events of which input devices. As in FIG. 8, users can choose to only receive touchscreen event, and ignore keying event; and users can choose both touchscreen and keying events at the same time. Referring to FIG. 9, users can determine the transparency of overlapped portions. For example, in the interface shown in FIG. 7, users can also choose the item of setting of overlaying display attribution to go to the next menu, and as in FIG. 10, users can determine the display attribute of the overlaying portions. Referring to FIG. 11 , a foreground task is running on the screen by users when a new task is incoming, such as a telephone, which also needs users to manipulate. Users can interact with the new task under the condition of not suspending the old task. As shown in the figure, a telephone is incoming when a user is playing a game. The user can also manipulate an incoming application by answering or hanging up, at the same time, he or she doesn't stop operating the game.

As shown in FIG. 11, when the game application is played, there is only one foreground task of a game, making up the whole screen. Events can be received by touchscreens if the application of a call is running again. The tasks of game and calling can be in the foreground simultaneously. Users can specify a default order of sorting tasks, for example, the tasks running latter is placed in front of the task running firstly by default, unless users adjust the order. So the task of an incoming call can be placed in front of the game task by default. Users can manipulate the incoming call and game respectively with two hands at the same time. At this time there is a touch event of two points at one time. (TouchEvent, TouchValue1, coordinate1), (TouchEvent, TouchValue2, coordinate2) is represented in the form of step S101 of FIG. 2, then the flag is added according to step S102 of FIG. 2. The flag is represented by choosing an array with an undefined length. The first value denotes the length of the array, every value after it denotes the tasks which processed this event. So two events can be respectively represented as (TouchEvent, TouchValue1, coordinate1, flag1), where flag 1 is 0, the initial value, flag1=[0] and (TouchEvent, TouchValue2,coordinate2,flag2), where flag 2 is also 0, the initial value, flag2=[0]. According to step S103 of FIG. 2, the application of the incoming call receives the two events, the coordinate point of one of which is within the virtual keying scope of incoming call, and is processed by the application of the incoming call, although the other may also be within the scope of the application window of the incoming call, but not within the scope of virtual keying. The application of the incoming call can choose to not to be processed. According to step S104, the two events change into (TouchEvent, TouchValue1,coordinate1,flag1), where flag1=[1 , 1]. The former 1 denotes that one task has been processed, and the latter 1 denotes that the processed task is 1. The other event is still (TouchEvent, TouchValue2, coordinate2, flag2), where flag2=[0]. The game task receives the two events, and can decide that event 1 has been processed, and event 2 hasn't been. It can be chosen that not event 1, but event 2 is to be processed. Then the two events change into (TouchEvent, TouchValue1, coordinate1, flag1), where flag1=[1 , 1], (TouchEvent, TouchValue2, coordinate2, flag2), where flag2=[1 , 2]. The first digit of 1 in the array denotes that one task has processed this event, and the second digit of 2 denotes that it is processed by tasks. These two processed events are transferred to the system, which processes them if needed. This way, answering a telephone while not suspending the running task is well done. The display portion can also take the form of semi-transparency of overlaying portions, which can also use the feature of color reversal of overlaying portions so as to distinguish easily.

An exemplary implementation is described below

### 1. Implementation in the Android system:

An attribute is added to Android activity, which specifies that users can have multiple focus points in multiple applications, and also specifies the display feature of overlaying portions when interacting with users at the same time, such as the color of fore-ground, transparency, the color of back-ground and transparency. Users can set these attributes. If the activity is to be refreshed, the overlapped portions of the activity, in combination with the attribute set by the activity which focuses and can obtain events, together with contents, combines an image, then the image will be refreshed. The user input events can be distributed according to the space of windows on the screen. If the windows are overlapped, then a suitable conversion will be made. The particular method is to arrange all the applications which obtain focuses and can interact with users simultaneously. The user input events are transferred to the foremost "activity", and this activity only captures the user events within its window scope to process, and other events will be directly transferred to next "activity". Unless processed, the events within this activity can also be transferred to a next activity after being converted, for example, long time pressing to short time pressing. These steps are repeated for the next activity.

### 2. Implementing in Windows system:

Another attribute is added to the application of view in Window. The display feature of overlapped portions of simultaneous interactions with users is set. Two mice can be disposed. Each of the two mice has its flags, and can move independently. User input events can be divided based on the space of an application on the screen, it may be that only the uppermost of the overlapped portions receives user events, or all of the overlapped portions receives user events, or it may be that the upper receives and converts events, then transfers to the lower, such as double click to single click. This way, users can interact with multiple applications simultaneously.

To address above technical issue, one of the aspects of the present exemplary embodiment is to provide a method of task processing of one screen and multi-foreground, including the following steps. In step S1, running a plurality of application windows on a same display screen by a multi-task processing mechanism. In step S2, receiving at least one user event by said application window. In step S3, classifying the received user events by an event management module and adding corresponding flags, so as to be processed by different tasks. In step S4, assigning the received user events to different tasks to be processed by a task management module, and returning respective processing results to respective application windows.

To address above technical issue, one of the aspects of the present exemplary embodiment is to provide a method of task processing of one screen and multi-foreground, including the following steps. In step S1, running a plurality of application windows on a same display screen by a multi-task processing mechanism. In step S2, receiving a user event. In step S3, classifying the received user event and adding corresponding flags, so as to be processed by different tasks. In step S4, processing the received user events with flags by a task management module, and modifying the flags of the processed user events.

According to another exemplary embodiment of the present invention, step S1 also includes the following steps. In step S11, creating a multi-task processing mechanism running a plurality of tasks simultaneously on the same screen by a multi-task system, wherein said tasks include foreground tasks for receiving user events and background tasks for not receiving user events. In step S12, classifying said plurality of tasks in a first priority by a first task management module, so that the priority of the foreground tasks is higher than the priority of the background tasks.

According to another exemplary embodiment of the present invention, said user events include a first type of events with position information and a second type of events without position information.

According to another exemplary embodiment of the present invention, said first type of events are represented as a first set of parameters (event, data, coordinate), and said second type of events are represented as a second set of parameters (event, data).

According to another exemplary embodiment of the present invention, said first type of events are represented as a first set of parameters (event, data, coordinate), and the second type of events are represented as a second set of parameters (event, data, default value).

According to another exemplary embodiment of the present invention, step S3 also include the following steps. In step S31, classifying said user events into different types by a decision unit in said event management module, and generating parameters corresponding to said types. In step S32, adding an event flag in the parameters of said user events by a flag adding unit in said event management module to distinguish the schedule of said user events being processed.

According to another exemplary embodiment of the present invention, said added event flags are represented as a third set of parameters (event, data, coordinate, flag).

According to another exemplary embodiment of the present invention, step S4 also includes the following steps. In step S41, processing all of the received user events by a task executing unit in said task management module, In step S42, modifying the added event flag in said user events which has been processed by a flag modifying unit in said task management module.

According to another exemplary embodiment of the present invention, it further comprises the following steps. In step S5, displaying at least one of tasks being executed by a display module.

According to another exemplary embodiment of the present invention, said step S5 also includes the following steps. In step S51, deciding pixel overlapped areas by an attribute unit of overlapped areas in said display module. In step S52 completing the conversion of display features of said overlapped areas by an attribute conversion unit in said display module.

According to another exemplary embodiment of the present invention, step S52 also includes the following steps. In step S521, converting the display features of said overlapped areas in a defined way by said attribute conversion unit, when the pixels of foreground tasks being executed fall into the areas where other task are. In step S522, forming an integral window of foreground tasks by overlaying the display features of the overlapped areas which have been converted in the defined way. In step S523, displaying on said screen the integral window of said foreground tasks together with the windows of other background tasks which are processed by the original window mechanism of the system.

The other aspect of the present invention is to provide a task processing device of one screen and multi-foreground, including: a display screen for supporting a multi-task processing mechanism to run a plurality of application windows; an application window for receiving user events; an event management module for classifying the received user events into different types; and a task management module for assigning the received user events to different tasks to be processed and returning respective processing results to respective application windows.

The other aspect of the present invention is to provide a task processing device of one screen and multi-foreground, including: a display screen for supporting a multi-task processing mechanism to run a plurality of application windows; an application window for receiving user events; an event management module for classifying the received user events into different types and adding corresponding flags, so as to be processed by different tasks; and a task management module for processing the received user events with flags and modifying the flags of the processed user events correspondingly.

According to another exemplary embodiment of the present invention, said multi-task processing mechanism includes: a multi-task system for creating a multi-task processing mechanism running a plurality of tasks simultaneously on the same screen, wherein said tasks include foreground tasks of receiving user events and background tasks of not receiving user events; and a first task management module for classifying the plurality of tasks in a first priority so that the priority of the foreground tasks is higher than the priority of the background tasks.

According to another exemplary embodiment of the present invention, said user events include a first type of events with position information and a second type of events without position information.

According to another exemplary embodiment of the present invention, said first type of events are represented as a first set of parameters (event, data, coordinate), and the second type of events are represented as a second set of parameters (event, data).

According to another exemplary embodiment of the present invention, said first type of events are represented as a first set of parameters (event, data, coordinate), and the second type of events are represented as a second set of parameters (event, data, default value).

According to another exemplary embodiment of the present invention, said event management module includes: a decision unit for classifying said user events to different types and generating the parameters corresponding to said types; and a flag adding unit for adding event flags in the parameters of said user events to distinguish the schedule of said user events being processed.

According to another exemplary embodiment of the present invention, said added event flags are represented as a third set of parameters (event, data, coordinate, flag).

According to another exemplary embodiment of the present invention, said task management module includes: a task executing unit for processing all of the received user events; and a flag modifying unit for modifying the added event flags in the user events which has been processed.

According to another exemplary embodiment of the present invention, it further includes a displaying module for displaying at least one of the tasks being executed.

According to another exemplary embodiment of the present invention, said displaying module includes: an attribute unit of overlapped areas for deciding the pixel overlapped areas; an attribute conversion unit for converting the display features of said overlapped areas in a defined way by said attribute conversion unit, when the pixels of foreground tasks being executed fall into the areas where other tasks are.

According to another exemplary embodiment of the present invention, said displaying module includes: an attribute unit of overlapped areas for deciding the pixel overlapped areas and specifying the display feature of overlapped areas with other foreground task windows; an attribute conversion unit for converting the display features of said overlapped areas in a defined way by said attribute conversion unit, when the pixels of foreground tasks being executed fall into the areas where other tasks are.

According to another exemplary embodiment of the present invention, said defined ways include: when the pixels of foreground tasks being executed fall into the areas where other tasks are, converting the display features of said overlapped areas in a defined way by said attribute conversion unit; forming an integral window of foreground tasks by overlaying the display features of the converted overlapped areas; and displaying on said screen the integral window of said foreground tasks together with the windows of other background tasks which are processed by the original window mechanism of the system.

The method and device of task processing of one screen and multi-foreground provided by the present disclosure addresses the issue of reasonable distribution of user events between a plurality of foreground tasks on a same screen and the simultaneous display of these task windows to run the plurality of foreground tasks simultaneously on the same screen.

It should be understood by the skilled in the art that the present invention can be embodied by methods, circuits and communication systems. Therefore, the exemplary embodiments of the present invention can be embodied by way of hardware, software or the combination of hardware and software. Here, all these forms are referred to as "circuit". A person having ordinary skill in the art may appreciate that all or part of steps involved in the above method of the exemplary embodiments may instruct the relevant hardware to complete through program. The program may be stored in a computer readable storage medium. The program includes one of the steps of the method exemplary embodiments or combination thereof when implementing. In addition, the respective functional units in the respective exemplary embodiments of the present invention may be integrated in one processing module, and may also singly physically exist, and may also be integrated in one module by two or more units. The above integrated module may be carried out in the form of hardware, and in the form of software functional module. When the integrated module is carried out in the form of software functional module and is sold or used as an independent product, it may also be stored in a computer readable storage medium. The above-mentioned storage medium may be read-only storage, disk or disc.

Object-oriented programming languages, such as Java®, Smalltalk or C++, common programming languages, such as "C" programming language, or low level codes, such as assembly language and/or micro-code are used to write computer program codes for executing the operations of the present invention. The program codes can execute wholly on a single processor as an independent software package and/or execute on multiple processors as a part of another software package.

The exemplary embodiments of the present invention has been illustrated with reference to the structure diagrams and/or block diagrams and/or flow charts of the methods, system and computer program product of the exemplary embodiment of the present invention. It should be understood that computer program instructions can be used to realize every block and combination thereof of these structure diagrams and/or block diagrams and/or flow charts. These computer program instructions can be provided to general-purpose computers, specialized purpose computers or the processors generating machines of other programmable data processing methods, so as to create the method specified in a block or blocks of structure diagram and/or block diagrams and/or flow charts via instructions executed by computers or the processors of other programmable data processing methods.

The computer program instructions may also be stored in a non-transitory computer readable storage medium, which may instruct computers or other programmable data processing method to run in a special way, thereby the instructions stored in a computer readable storage generate a production, which includes the instructive methods of functions specified by a block or blocks of the structure diagram and/or block diagrams and/or flow charts.

The non-transitory computer program instructions can also be loaded into computers or other programmable data processing methods, so that a serial of operation steps are able to be executed on computers or other programmable data processing methods to generate the processes realized by computers. This way, the instructions executed on computers or other programmable data processing methods provide the steps for realizing the functions specified by a block or blocks of the structure diagram and/or block diagrams and/or flow charts.

A person having ordinary skill in the art may understand that various operations, methods, steps of a flow chart, measures and solutions discussed by the exemplary embodiments of the present invention can be interleaved, modified, merged or deleted. Further, the one having various operations, methods, other steps of a flow chart, measures and solutions discussed by the present disclosure can also be interleaved, modified, rearranged, decomposed, merged or deleted. Further, the one of prior art having various operations, methods, steps in a flow chart, measures and solutions discussed by the present invention can also be interleaved, modified, rearranged, decomposed, merged or deleted.

The schematic exemplary embodiments of the present invention have been disclosed in the drawings and description. Although special terms are used, they are used in general and descriptive meanings, not for the purpose of limiting. It should be pointed out that a person having ordinary skill in the art may also make several improvements and modifications in the premise of not losing the principle of the present invention, and these improvements and modifications should also be regarded as the protection scopes of the present invention. The protection scopes of the present invention should be defined by the claims of the present invention.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of task processing of one screen and multi-foreground, the method comprising:
running a plurality of application windows on a same display screen by a multi-task processing mechanism;
receiving user events;
classifying the received user events into different types; and
assigning the received user events to different tasks to be processed by a task management module, and returning respective processing results to respective application windows.

2. The method of claim 1, wherein the running of the plurality of application windows on the same display screen by the multi-task processing mechanism comprises:
creating a multi-task processing mechanism running a plurality of tasks simultaneously on the same screen by a multi-task system, wherein the tasks include foreground tasks for receiving user events and background tasks for not receiving user events; and
classifying the plurality of tasks in a first priority by a first task management module, so that the priority of the foreground tasks is higher than the priority of the background tasks.

3. The method of claim 1, wherein the user events include a first type of events with position information and a second type of events without position information.

4. The method of claim 3, wherein the first type of events are represented as a first set of parameters including event, data, and coordinate parameters, and the second type of events are represented as a second set of parameters including event and data parameters or event, data and default value parameters.

5. The method of claim 1, wherein the classifying of the received user events into different types comprises:
classifying the user events into different types by a decision unit in the event management module, and generating parameters corresponding to the types; and
adding an event flag in the parameters of the user events by a flag adding unit in the event management module to distinguish the schedule of the user events being processed.

6. The method of claim 5, wherein the added event flags are represented as a third set of parameters including event, data, coordinate, and flag parameters.

7. The method of claim 5, **characterized in that** the assigning of the received user events to different tasks to be processed by the task management module, and the returning of the respective processing results to respective application windows comprises:
processing all of the received user events by a task executing unit in the task management module; and
modifying the added event flag in the user events which has been processed by a flag modifying unit in the task management module.

8. The method of claim 1, further comprising:
displaying at least one of tasks being executed by a display module.

9. The method of claim 8, wherein the displaying of the at least one of tasks being executed by the display module comprises:
deciding pixel overlapped areas by an attribute unit of overlapped areas in the display module; and
completing the conversion of display features of the overlapped areas by an attribute conversion unit in the display module.

10. The method of claim 9, wherein the completing of the conversion of the display features of the overlapped areas by the attribute conversion unit in the display module comprises:
converting the display features of the overlapped areas in a defined way by the attribute conversion unit, when the pixels of foreground tasks being executed fall into the areas where other task are;
forming an integral window of foreground tasks by overlaying the display features of the overlapped areas which have been converted in the defined way; and
displaying on the screen the integral window of the foreground tasks together with the windows of other background tasks which are processed by the original window mechanism of the system.

11. An electronic device, comprising:
a display screen for supporting a multi-task processing mechanism to run a plurality of application windows;
an application window for receiving user events;
an event management module for classifying the received user events into different types; and
a task management module for assigning the received user events to different tasks to be processed and for returning respective processing results to respective application windows.

12. The electronic device of claim 11, wherein the task management module comprises:
a multi-task system for creating a multi-task processing mechanism running a plurality of tasks simultaneously on the same screen, wherein the tasks include foreground tasks of receiving user events and background tasks of not receiving user events; and
a first task management module for classifying the plurality of tasks in a first priority so that the priority of the foreground tasks is higher than the priority of the background tasks.

13. The electronic device of claim 11, wherein the event management module comprises:
a decision unit for classifying the user events to different types and generating the parameters corresponding to the types; and
a flag adding unit for adding event flags in the parameters of the user events to distinguish the schedule of the user events being processed.

14. The electronic device of claim 11, further comprising a displaying module for displaying at least one of the tasks being executed.

15. The electronic device of claim 11, wherein the displaying module comprises:
an attribute unit of overlapped areas for deciding the pixel overlapped areas; and
an attribute conversion unit for converting the display features of the overlapped areas in a defined way by the attribute conversion unit, when the pixels of foreground tasks being executed fall into the areas where other tasks are.
